# EUROPÄISCHE PATENTSCHRIFT

(11) **EP 2 840 679 B1**
(45) Veröffentlichungstag und Bekanntmachung des Hinweises auf die Patenterteilung: **08.03.2017**
(21) Anmeldenummer: 14169382.0
(22) Anmeldetag: 22.05.2014
(51) Int. Cl.: H02K 1/27, H02K 15/03

(54) **Rotor für einen Elektromotor und Verfahren zur Herstellung eines Rotors**
Rotor for an electric motor and method for manufacturing a rotor for an electric motor
Rotor pour un moteur électrique et procédé de fabrication d'un rotor

(30) Priorität: 16.07.2013 DE 102013107526
(43) Veröffentlichungstag der Anmeldung: 25.02.2015
(73) Patentinhaber: Miele & Cie. KG, 33332 Gütersloh (DE)
(72) Erfinder: Hegemann, Hans Joachim, 53902 Bad Münstereifel (DE); Jablonski, Marcel, 53894 Mechernich (DE); Beeker, Udo, 53913 Swisttal (DE)

(56) Entgegenhaltungen:
- EP-A1- 1 748 533
- EP-A1- 1 841 041
- EP-A2- 1 657 801
- WO-A1-2012/137464
- WO-A2-2011/076777

## Beschreibung

Die Erfindung betrifft einen Rotor für einen Elektromotor, aufweisend eine zylindrische Form mit einem an einer Welle montierten Grundkörper, in dem zumindest mehrere umlaufend angeordnete Nuten bzw. Mulden ausgebildet sind, in die jeweils ein Permanentmagnet eingesetzt und fixiert ist.

Bei bekannten Rotoren werden die Magnete gewöhnlich an einer Außenseite des Rotors oder in Taschen desselben verklebt, um eine dauerhafte Verbindung zwischen dem Rotor und den Permanentmagneten bereitzustellen. Wichtig ist, die Magnete in eine definierte Position zu bringen, um auftretende Unwuchten während des Betriebes zu minimieren. Die Magnete sollen zudem gegen mechanische Beschädigungen geschützt sein. Dazu ist beispielsweise bekannt, die Magnete mit einem Kunststoff zu umspritzen.

Aus der DE 37 19 197 A1 ist ein Rotor für einen Elektromotor bekannt, der einen Trägerkörper mit daran angeklebten Permanentmagneten umfasst. Um hohen Belastungen und hohen Drehzahlen standzuhalten, ist über die Dauermagnete eine Bandage gestülpt, die die Magnete an den Trägerkörper herandrückt und somit vor einem Ablösen aufgrund auftretender Zentrifugalkräfte schützt. Zur sicheren Positionierung sind die Hohlräume zwischen Bandage und Magneten mit Kunststoff ausgefüllt.

Diese recht stabile Ausführung ist jedoch recht aufwändig herzustellen, da mehrere verschiedene Montageschritte zur sicheren Fixierung der Magnete notwendig sind. Ferner muss stets berücksichtigt werden, dass der Materialmix aus Kleber, Magnetmaterial und Kunststoff bei mechanischer und thermischer Beanspruchung keine negativen Eigenschaften aufweist bzw. bekommt.

Eine weitere Rotoranordnung mit gespritzten Streben zur Fixierung von Permanentmagneten ist aus der EP 1 841 041 bekannt.

Der Erfindung liegt somit die Aufgabe zu Grunde, einen einfach aufgebauten Rotor für einen Elektromotor bereitzustellen, der hohen Belastungen, insbesondere hohe Drehzahlen und thermische Belastungen sicher standhält.

Erfindungsgemäß wird unter anderem diese Aufgabe durch einen Rotor mit den Merkmalen des unabhängigen Anspruchs 1, einen Motor gemäß Anspruch 10 und durch ein Verfahren gemäß Anspruch 11 gelöst. Vorteilhafte Ausgestaltungen und Weiterbildungen der Erfindung ergeben sich aus den abhängigen Ansprüchen.

Die mit der Erfindung erreichbaren Vorteile bestehen darin, dass durch die Ausbildung eines in sich stabilen Käfigs auf weitere Befestigungsmittel, wie Kleber, verzichtet werden kann.

Ferner ist an den sensiblen Übergangstellen zwischen Magnet und Grundkörper kein unbeherrschbarer Materialmix mehr vorhanden, da der sichere Halt durch die formschlüssige Einbindung des Käfigs in oder an die Einzelteile des Rotors bereitgestellt wird. Der Rotor zeichnet sich somit dadurch aus, dass sich bei eingesetzten Permanentmagneten zwischen den Nuten bzw. Mulden ein Hohlraum ausbildet, und dass der Grundkörper mit den darin eingesetzten Permanentmagneten in einer Kunststoffmasse derart eingebunden ist, dass sich ein Käfig aus Kunststoffmaterial mit an den Stirnseiten ausgebildeten umlaufenden Ringen, die mit in den Hohlräumen ausgebildeten Längsstreben miteinander verbunden sind, ergibt. Neben der formschlüssigen Einbindung hat die Ausbildung eines Käfigs mit miteinander verbundenen Streben den Vorteil, dass der Käfig selbst dazu ausgebildet ist, die Magnete unter ständiger Krafteinwirkung oder Druckbelastung radial gegen den Grundkörper, oder genauer ausgedrückt gegen den Nutgrund der Nuten oder Einbuchtungen zu pressen und so auf dem Formkörper sicher zu fixieren. Die Ausbildung des Kunststoffkäfigs zur Fixierung der Magnete ist besonders gut geeignet für Ferritmagnete, da diese durch die Kunststoffummantelung, die der Käfig bietet, in sich stabilisiert und Abplatzer vom mürben Ferritmagneten verhindert werden.

Um noch sicherer zu verhindern, dass die Magnete aufgrund auftretender Zentrifugalkräfte sich radial nach außen bewegen oder vom Formkörper ablösen ist es vorgesehen, dass die Längsstreben im Profil eine Dreiecks- oder Trapezform mit außenliegender Längsseite aufweisen.

In einer vorteilhaften Weiterbildung ist der Kunststoff ein mit Fasern, beispielsweise Glas-Polyester- Keflar- oder Karbonfaser verstärkter Kunstsoff. Damit wird eine in sich stabile Ausbildung bzw. stabiler Gesamtverbund des Käfigs erreicht. Dabei ist es vorteilhaft, wenn die Fasern in Längsrichtung der Streben ausgerichtet sind.

In einer zweckmäßigen Ausführung ist der Käfig im Spritzgießverfahren hergestellt, wodurch eine rationelle Großserienfertigung ermöglicht wird.

In einer anderen Ausführung ist der Käfig als Kunststoffformkörper vorgefertigt auf den Grundkörper und die Magnete aufgebracht bzw. übergestülpt. Damit entfällt bei der Montage der Spritzgießprozess, der für manche Anwendungen oder kleinere Stückzahlen nicht lohnend bereitgestellt werden kann.

Der Käfig kann dabei einsatzbedingt ohne aufwändige Maßnahmen so ausgebildet werden, dass die Magnetflächen außenseitig freiliegend ausgebildet sind, beispielsweise für trocken laufende Antriebe oder dass die Magnetflächen außenseitig von Kunstsoff verdeckt sind, um beispielsweise eine vollständige wasserdichte Kapselung bereitzustellen. Ferner werden Beschädigungen der Magnete bei Berührung des Rotors vermieden.

In einer insgesamt zweckmäßigen Ausführung weisen die im Grundkörper eingebrachten Nuten schräge, nach innen geneigte Seitenflächen auf, an denen die Seitenflächen der Magnete, die eine im wesentlichen gleiche Neigung der Seitenflächen aufweisen, zumindest mittelbar zur Anlage kommen. Sind die Nuten im Querschnitt keilförmig oder trapezförmig ausgebildet, in denen die korrespondierende Keilform der Magnete zur Anlage kommen kann, wodurch das Ablösen bei auftretenden Zentrifugalkräften sicher verhindert wird. Durch den hier bereitgestellten Hinterschnitt wird zusätzlich die Montage verbessert bzw. vereinfacht.

Zur Bereitstellung von Verbindungsstegen mit vordefinierter Mindestdicke ist es in einer insgesamt vorteilhaften Ausführung vorgesehen, die Nuten im Grundkörper jeweils in ihrem Nutgrund zumindest mit einer durchgehenden Rinne zu versehen, die durchgehend mit Kunststoff ausgefüllt sind und somit als Streben zur Verbindung mit den beiden stirnseitigen Ringen fungieren. Ferner wird das Ausfüllen von Hohlräumen zwischen Nutgrund oder Muldengrund und der innenseitigen Magnetfläche bewirkt. Insgesamt wird die Stabilität des Käfigs verbessert und ein stabiler Verbund aus Formkörper, Käfig und Magnete erreicht. Ferner kann auf einfache Weise der vorgegebene Außendurchmesser des Rotors durch die Positionierung der Magnete eingestellt werden, wobei die durch die Ausfüllung der dadurch entstehenden Hohlräume am Nutgrund der Toleranzausgleich realisiert wird.

Zu weiteren Verbesserung des sicheren Halts der Magnete auf dem Formkörper ist eine Hülse oder ein Rohr vorgesehen, die/das außenseitig über die im Käfig eingebetteten Magnete gestülpt bzw. gepresst ist.

In einer vorteilhaften Weiterbildung umfasst die Hülse zwei Schalen oder Rohrabschnitte, die jeweils einen stirnseitigen, umlaufenden Randansatz zur Fixierung am Grundkörper oder Ring aufweisen. Der kragenartige Randansatz steigert noch einmal die Stabilität und hält die Hülse selbst in die vorgegebene Position. Die Hülse ist dabei beispielsweise als Tiefziehteil aus einer Kunststoffplatte oder Blech oder einem Spritzgießteil aus Kunststoff hergestellt.

Die Erfindung betrifft ferner einen bürstenlosen, elektrisch antreibbaren Synchronmotor mit einem Rotor, wie vorstehend beschrieben.

Die Erfindung betrifft ferner ein Verfahren zum Herstellung eines Rotors (10) wie vorstehend beschrieben, umfassend folgende Schritte
- Einlegen des Grundkörpers in eine in einer Spritzgießform befindlichen Vorrichtung,
- Einlegen bzw.- Positionieren von Permanentmagneten in die im Grundkörper befindlichen Mulden oder Nuten,
- Zweckmäßigerweise Schließen der Spritzgießform mittels eines Verschlussteils, oder die Spritzgießform anderweitig in Bereitschaft versetzten,
- Einspritzen einer fließfähigen, aushärtbaren Kunststoffmasse, wobei das Einspritzen mit

Hilfe eines Druckes erfolgt, der eine Ausbreitung der Kunststoffmasse in Hohlräume zwischen den Magneten und den Mulden oder Nuten im Hohlkörper verursacht und sich ein Käfig mit an den Stirnseiten ausgebildeten umlaufenden Ringen, die mit in den Hohlräumen ausgebildeten Längsstreben miteinander verbunden sind, ausbildet. Damit lässt sich auf einfache Weise in einer einzigen Fertigungsstation sowohl das Ausgießen der Hohlräume als auch die Fixierung der Magnete im Rotor bewerkstelligen. Eine zusätzliche Klebung der Magnete an dem Grundkörper kann entfallen. Der Fixierung der Magnete erfolgt somit kleberlos.

In einer vorteilhaften Weiterbildung wird vor dem Einspritzen der fließfähigen, aushärtbaren Kunststoffmasse eine Hülse über die auf dem Grundkörper eingelegten bzw. positionierten Magnete gestülpt, wobei die Hülse ein Herausfließen der Kunststoffmasse größtenteils verhindert, sodass die Spritzgießform oder das Spritzgießwerkzeug, das die Form und die Vorrichtungen zur Positionierung des Grundkörpers und der Magneten umfasst, stark vereinfacht werden kann. Die Positionierung der Magnete wird hierbei bereits durch die Hülse bereitgestellt.

Ein Ausführungsbeispiel der Erfindung ist in den Zeichnungen rein schematisch dargestellt und wird nachfolgend näher beschrieben. Es zeigen
- Fig. 1:: einen elektrischen Motor in Wirkposition in einer Waschmaschine
- Fig. 2:: den Rotor in einer Explosionsdarstellung
- Fig. 3:: den Rotor des Elektromotors in einer perspektivischen Ansicht
- Fig. 4a, 4b:: die Verbindung zwischen Magnet und Grundkörper in einer Detailansicht
- Fig. 5:: eine Ausführung des Rotors mit übergestülpter Hülse und
- Fig. 6a - c:: Verschiede Ausführungen des Rotors in einer stirnseitigen Schnittansicht.

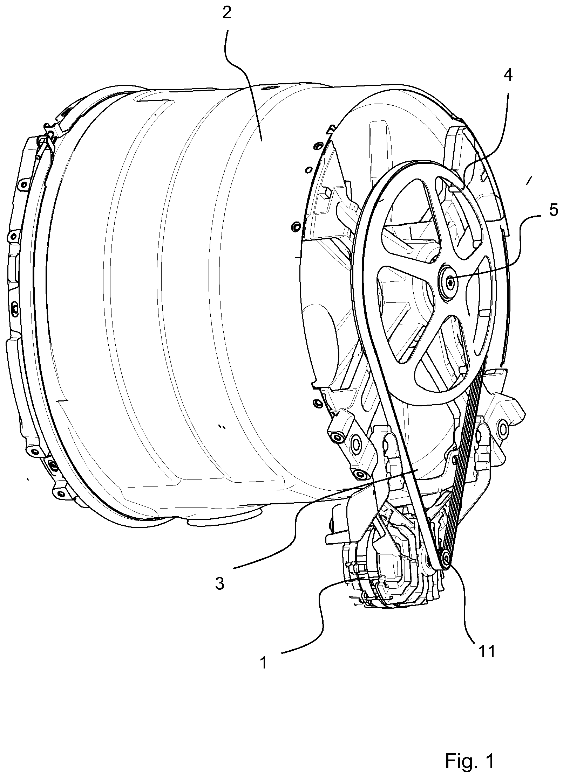

Fig. 1 zeigt beispielhaft den Motor 1 in einem Einsatz in einer Waschmaschine, der an dem Laugenbehälter 2 befestigt ist und zum Antreiben der Trommel vorgesehen ist. Als Motor 1 ist hierbei ein bürstenloser Synchronmotor mit Permanentmagnetrotor 10 vorgesehen, der mit einem Frequenzumrichter (nicht gezeigt) bestromt wird. Über die Rotorwelle 11 und dem Transmissionsriemen 3 wird die Drehbewegung auf die Riemenscheibe 4 der Trommelwelle 5 übertragen.

Ein Motor 1 dieser Bauart ist auch für andere Antriebe, wie Pumpen, Gebläse in elektrischen Geräten, insbesondere Haushaltsgeräten, wie Waschmaschinen, Trockner, Geschirrspüler, Dunstabzugshauben oder Staubsauger, geeignet. Ein solcher Motor 1 ist besonders für den Betrieb mit sehr hohen Drehzahlen, beispielsweise im Bereich von 20 000 bis 50 000 u/min, zu laufen. Diese Drehzahlen sind für Staubsaugergebläse oder Drehantrieben in Waschmaschinen geeignet. Auch für Drehzahlen im Bereich von 3 000 bis 5000 u/min, wie sie für den Antrieb eines Wäschetrockners benötigt werden, ist ein Motor der genannten Bauart geeignet.

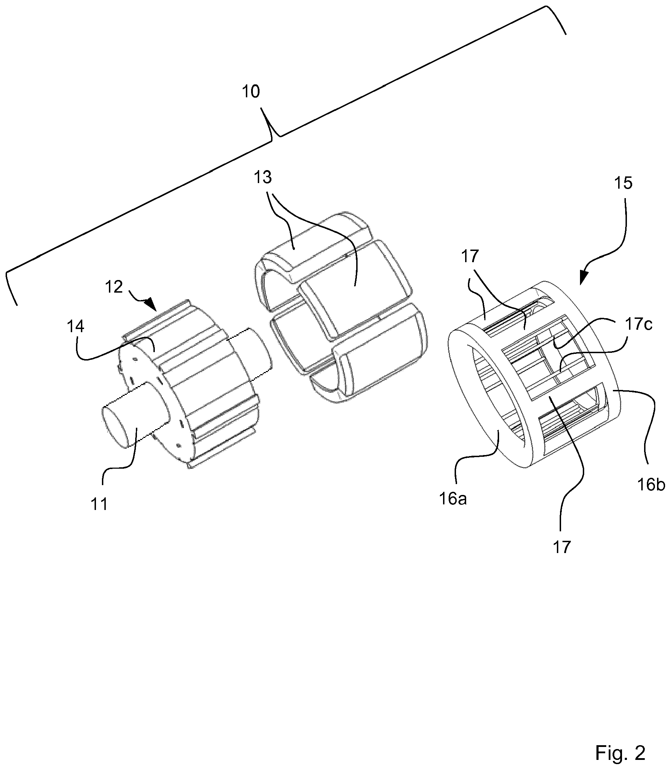

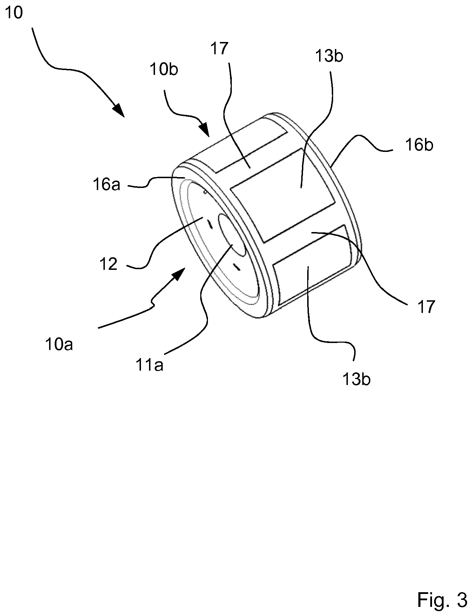

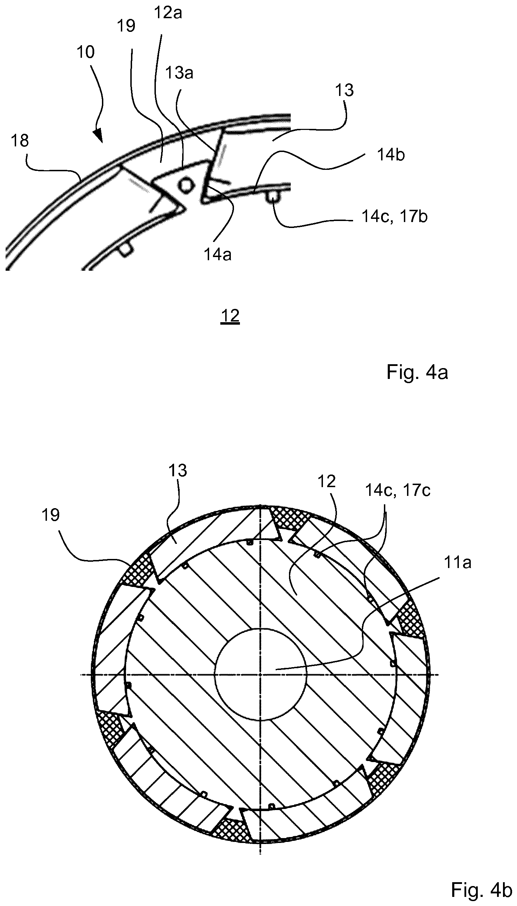

Fig. 2 zeigt beispielhaft den Rotor im Detail in einer Explosionsansicht. Der Grundkörper 12 ist dabei drehfest mit der Welle 11 verbunden, um das über die Magnete13 eingeleitete Drehmoment auf die Welle 11 zu übertragen. Der Grundkörper 12 umfasst dabei zweckmäßigerweise ein Blechpaket bzw. ist aus einem solchen gebildet. Der Grundkörper 12 ist mit mantelseitig offenen Mulden oder Nuten 14 versehen, in die die Magnete 13 eingelegt werden. Die Magnete 13 sind dabei teilkreisförmig ausgebildet, um der zumindest im Wesentlichen der zylindrischen Form des Rotors 10 zu folgen bzw. eine zylindrische Form möglichst ohne größere Versatze zu ermöglichen. Als Magnete 13 werden vorzugsweise sogenannte Segmentmagnete in der Ausführung als Ferritmagnet verwendet. Andere Magnete, wie Seltene-Erdmagneten können ebenfalls verwendet werden, je nach Anforderungen für den Motor 1. Zu erkennen ist ferner der Käfig 15, der einer zylindrischen Form angelehnt ist und an seinen Stirnseiten 10a (Fig.3) jeweils einen umlaufenden Ring 16a, 16b umfasst, die mittels Streben 17 miteinander fest verbunden sind, vorzugsweise einstückig ausgeführt. Im montierten Zustand liegen die Streben 17 in Zwischenräumen 19 (Fig. 4) zwischen den Seitenflächen 13a der Magnete 13 und den Seitenflächen 14a der Nuten 14.

Fig. 3 zeigt den Rotor 10 im montierten Zustand, hier ohne Welle 11, die durch die Öffnung 11a im Grundkörper 12 unter einer Presspassung geschoben und fixiert werden kann. Zu erkennen ist der stirnseitig umlaufende Ring 16, und von diesem ausgehend sich die Streben 17 in Richtung des zweiten Ringes 16b an der gegenüberliegenden Stirnseite erstrecken. In dem hier dargestellten Beispiel umgeben oder betten die Streben 17 dabei die Magneten 12 randseitig ein, sodass die außenseitigen Flächen 13b der Magnete 13 frei liegen. Insgesamt ergibt der Verbund aus den gebogenen Magnetscheiben 13 mit den Streben 17 eine Mantelfläche 10b eines Zylinders mit kreisförmiger Stirnfläche 10a.

Fig. 4a zeigt für eine bevorzugte Ausführung im Detail die Verbindung eines Magneten 13 an einer Seitenfläche 14a der Nut 14, die in Umfangsrichtung durch jeweils zwei benachbarte Vorsprünge 12a begrenzt ist. Die Seitenfläche 14a ist dabei schräg nach innen, also zur mantelseitigen Öffnung bzw. Freifläche für den Magneten 13, geneigt. An dieser Fläche 14a kommt die Seitenfläche 13a des Magneten 13 zur Anlage, sodass ein Ablösen der Magnete 13 bei hohen Zentrifugalkräften verhindert wird. Der verbleibende Zwischenraum 19 zwischen dem Material des Grundkörpers 12 und den Magneten 13 ist mit Kunststoffmasse zur Ausbildung der Streben 17 ausgefüllt. Die Streben 17 sind hierbei im Querschnitt zumindest in etwa trapezförmig bzw. gekrümmt trapezförmig ausgebildet, wobei sich die lange Seite des Trapezes an der äußeren Mantelfläche 10b (Fig. 3) befindet. Im Nutgrund 14b ist eine Rinne 14c ausgebildet, die ebenfalls mit Kunststoff ausgefüllt wird, um eine zusätzliche, die Ringe 16a, 16b verbindende Strebe 17b zu bilden. Ferner werden die Magnete durch den im Nutgrund 14b aufgebauten Druck während des Einbringens der Kunststoffmasse nach außen in die vorbestimmte Position bewegt bzw. gehalten.

Fig. 4b zeigt in einer stirnseitigen Ansicht den mit Magneten 13 bestückten Grundkörper 12 in einer schematischen Ansicht. Hierbei ist zu erkennen, dass für jede Nut 14 jeweils zwei Rinnen 14c für die Ausbildung der innenseitigen Streben 17c vorgesehen sind, um insgesamt die Stabilität des Käfigs 15 zu verbessern und eine gleichmäßige Kraftverteilung zu erreichen.

Ferner können in einer weiteren Ausführung des Rotors 10 Spalte oder Lücken zwischen der schrägen Seitenfläche 14a und der Seitenfläche 13a des Magneten 13 mit Kunststoffmasse ausgefüllt werden, um Toleranzen hinsichtlich der Maßhaltigkeit der einzelnen Bauteile auszugleichen und die Gesamtfestigkeit des Rotors 10 zu verbessern.

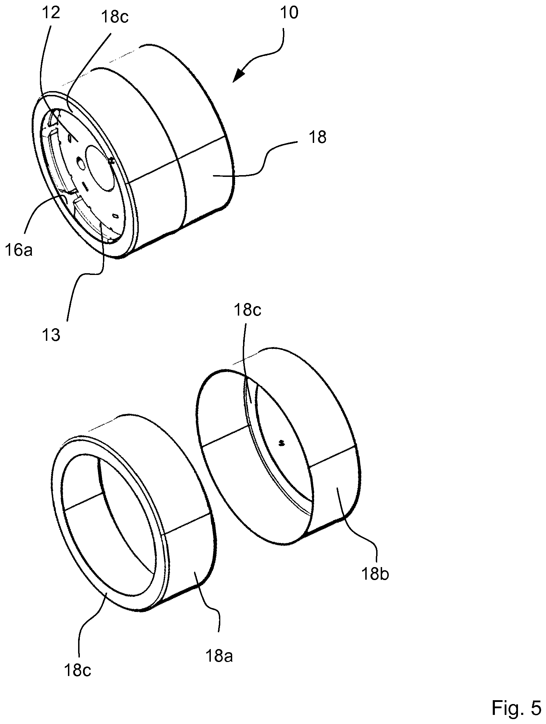

Fig. 5 zeigt eine Ausführung des Rotors 10 mit einer übergestülpten Hülse 18, die mantelseitig die Magnete 13 und den Käfig 15, zumindest die Streben 17, abdeckt. Die Hülse ist dabei im Durchmesser etwas kleiner ausgebildet, als der mit den Magneten 13 und Käfig 15 bestückte Grundkörper 12, um unter einer Presspassung einen guten und dauerhaften Festsitz bereitzustellen. In einer bevorzugten Weiterbildung umfasst die Hülse 18 zwei Schalenkörper 18a, 18b bzw. ist aus diesen gebildet. Die Schalenkörper 18a, 18b besitzen jeweils an einer Stirnseite einen umlaufenden Randansatz 18c, der als Anschlag oder Fixierung für die auf dem Formkörper aufgebrachten Teile 13, 15 dient und diese gegen axiales Verrutschen sichert. Die Ausführung mit Hülse 18 ist besonders geeignet für Motoren mit hoher Drehzahl, beispielsweise im Bereich von 20 000 bis 50 000 u/min Nenndrehzahl.

Die Befestigung der Permanentmagnete 13 an den Grundkörper 12 mit Hilfe des Käfigs 15, wie oben beschrieben, ist besonders geeignet für Innenläufer, wie in den Figuren gezeigt, kann jedoch in gleicher Weise für Außenläufer verwendet werden.

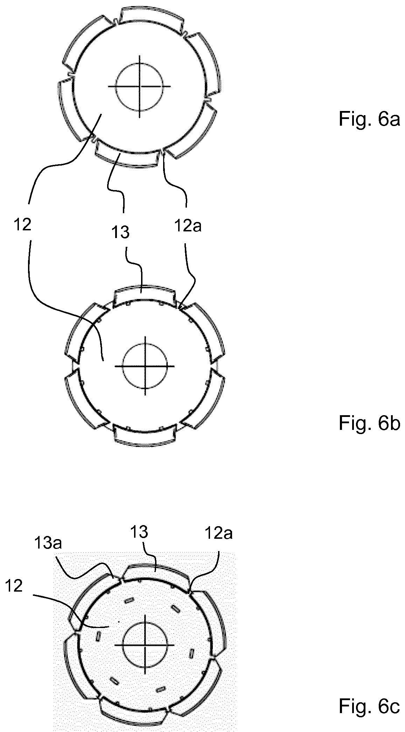

Fig. 6a bis 6c zeigen in der stirnseitigen Schnittdarstellung verschiedene Formen der Magnete 13 und des Grundkörpers 12 mit den entsprechenden Vorsprüngen 12 für die seitliche Anlage bzw. der Positionierung der Magnete 13 auf dem Grundkörper 12. Fig. 6c zeigt eine Ausführung, in der die Magneten an ihren Seitenflächen 13a stark angeschrägt sind, um Raum für eine Strebe 17 mit einem keilförmigen und großen Querschnitt bereitzustellen.

## Patentansprüche

1. Rotor (10) für einen Elektromotor (1), aufweisend eine zylindrische Form mit einem an einer Welle (11) montierten Grundkörper (12), in dem zumindest mehrere umlaufend angeordnete Nuten (14) ausgebildet sind, in die jeweils ein Permanentmagnet (13) eingesetzt und fixiert ist,
wobei der Grundkörper (12) mit den darin eingesetzten Permanentmagneten (13) in einer Kunststoffmasse derart eingebunden ist, dass sich ein Käfig (15) mit an den Stirnseiten ausgebildeten umlaufenden Ringen (16a, 16b), die mit zwischen jeweils zwei eingesetzten Permanentmagneten (13) ausgebildeten Längsstreben (17) miteinander verbunden sind, ergibt,
**dadurch gekennzeichnet, dass**
die Nuten (14) im Grundkörper (12) jeweils in ihrem Nutgrund (14b) zumindest eine durchgehende Rinne (14c) aufweisen, in der sich eine durchgehende Strebe (17b, 17c) aus Kunststoff befindet, die die beiden stirnseitigen Ringe (16a, 16b) verbindet und durch die der jeweilige Permanentmagnet (13) in der vorbestimmten Position gehalten wird.

2. Rotor (10) nach Anspruch 1,
wobei die Längsstreben (17) im Profil eine Dreiecks- oder Trapezform mit außenliegender Längsseite aufweisen.

3. Rotor (10) nach Anspruch 1 oder 2,
wobei der Kunststoff ein mit Fasern, beispielsweise Polyester-, Kevlar- oder Karbonfaser verstärkter Kunststoff ist.

4. Rotor (10) nach einem der Ansprüche 1 bis 3,
wobei der Käfig (15) im Spritzgießverfahren hergestellt ist.

5. Rotor (10) nach einem der Ansprüche 1 bis 4,
wobei die Magnetflächen (13b) außenseitig freiliegend ausgebildet sind.

6. Rotor (10) nach einem der Ansprüche 1 bis 4,
wobei die Magnetflächen (13b) außenseitig von Kunststoff verdeckt sind.

7. Rotor (10) nach einem der Ansprüche 1 bis 6,
wobei die im Grundkörper (12) eingebrachten Nuten (14) schräge, nach innen geneigte Seitenflächen (14a) aufweisen, an denen die Seitenflächen (13a) der Magnete (13), die eine im Wesentlichen gleiche Neigung der Seitenflächen (14a) aufweisen, mittelbar oder direkt zur Anlage kommen.

8. Rotor (10) nach einem der Ansprüche 1 bis 7,
umfassend eine Hülse (18) oder ein Rohr, das außenseitig über die im Käfig (15) eingebetteten Magnete (13) gestülpt ist.

9. Rotor (10) nach Anspruch 8,
wobei die Hülse (18) zwei Schalen (18a, 18b) oder Rohrabschnitte umfasst, die jeweils einen stirnseitigen, umlaufenden Randansatz (18c) zur Fixierung am Grundkörper (12) oder Ring (16a, 16b) des Käfigs (15) aufweisen.

10. Bürstenloser, elektrisch antreibbarer Synchronmotor (1) mit einem Rotor (10) gemäß einem der Ansprüche 1 bis 9.

11. Verfahren zur Herstellung eines Rotors (10) gemäß einem der Ansprüche 1 bis 9, umfassend folgende Schritte
- Einlegen eines Grundkörpers (12) in eine in einer Spritzgießform befindlichen Vorrichtung, wobei in dem Grundkörper (12) zumindest mehrere umlaufend angeordnete Nuten (14) ausgebildet sind und die Nuten (14) im Grundkörper (12) jeweils in ihrem Nutgrund (14b) zumindest eine durchgehende Rinne (14c) aufweisen,
- Einlegen bzw. Positionieren von Permanentmagneten (13) in die im Grundkörper (12) befindlichen Nuten (14),
- Schließen der Spritzgießform mittels eines Verschlussteils oder Versetzen der Spritzgießform in Bereitschaft,
- Einspritzen einer fließfähigen, aushärtbaren Kunststoffmasse, wobei das Einspritzen mit Hilfe eines Druckes erfolgt, der eine Ausbreitung der Kunststoffmasse in Hohlräume (19) zwischen den Magneten (13) und den Nuten (14) und in die Rinnen (14c) im oder am Grundkörper (12) verursacht und sich ein Käfig (15) mit an den Stirnseiten ausgebildeten umlaufenden Ringen (16a, 16b), die mit in den Hohlräumen (19) und den Rinnen (14c) ausgebildeten Längsstreben (17, 17b, 17c) miteinander verbunden sind, ausbildet,
wobei die Magnete (13) durch den im Nutgrund (14b) aufgebauten Druck während des Einbringens der Kunststoffmasse nach außen in eine vorbestimmte Position bewegt oder gehalten werden.

12. Verfahren nach Anspruch 11,
wobei vor dem Einspritzen der fließfähigen, aushärtbaren Kunststoffmasse eine Hülse (18) über die auf dem Grundkörper (12) eingelegten bzw. positionierten Magnete (14) gestülpt wird.

13. Verfahren nach Anspruch 11,
wobei die Permanentmagneten (13) an der Oberfläche des Grundkörpers (12) oder an der Innenfläche der Spritzgussform anliegen, bevor die aushärtbare Kunststoffmasse in die Spritzgussform eingespritzt wird.

## Claims

1. Rotor (10) for an electric motor (1), having a cylindrical shape and comprising a main body (12) which is mounted on a shaft (11), in which body at least a plurality of peripherally arranged grooves (14) are formed, into each of which a permanent magnet (13) is inserted and fixed,
the main body (12) and the permanent magnets (13) inserted therein being embedded in a plastics compound in order to form a cage (15) having peripheral rings (16a, 16b) formed on the end faces thereof, which rings are connected to one another by means of longitudinal struts (17) which are formed between two inserted permanent magnets (13) in each case, **characterised in that**,
each of the grooves (14) in the main body (12) have at least one continuous channel (14c) in the groove base (14b) thereof containing a continuous strut (17b, 17c) made of plastics material which connects the two rings (16a, 16b) formed on the end faces and by means of which the permanent magnet (13) in question is held in the predetermined position.

2. Rotor (10) according to claim 1,
wherein, in profile, the longitudinal struts (17) have a triangular or trapezoidal shape having an outer longitudinal side.

3. Rotor (10) according to either claim 1 or claim 2,
wherein the plastics material is a plastics material reinforced with fibres, such as polyester, Kevlar or carbon fibres.

4. Rotor (10) according to any of claims 1 to 3,
wherein the cage (15) is produced using an injection moulding process.

5. Rotor (10) according to any of claims 1 to 4,
wherein the magnetic surfaces (13b) are designed to be exposed on the outside.

6. Rotor (10) according to any of claims 1 to 4,
wherein the outside of the magnetic surfaces (13b) is covered with plastics material.

7. Rotor (10) according to any of claims 1 to 6,
wherein the grooves (14) made in the main body (12) have oblique, inwardly inclined lateral surfaces (14a), with which the lateral surfaces (13a) of the magnets (13), which surfaces have substantially the same inclination as the lateral surfaces (14a), indirectly or directly come into contact.

8. Rotor (10) according to any of claims 1 to 7,
comprising a sleeve (18) or a tube that is pulled over the outside of the magnets (13) embedded in the cage (15).

9. Rotor (10) according to claim 8,
wherein the sleeve (18) comprises two shells (18a, 18b) or tube portions which each have a peripheral rim (18c) on the end face thereof for fixing to the main body (12) or ring (16a, 16b) of the cage (15).

10. Brushless, electrically driven synchronous motor (1) comprising a rotor (10) according to any of claims 1 to 9.

11. Method for producing a rotor (10) according to any of claims 1 to 9, comprising the following steps:
- inserting a main body (12) into a device in an injection mould, wherein at least a plurality of peripherally arranged grooves (14) are formed in the main body (12) and the grooves (14) in the main body (12) each have at least one continuous channel (14) in the groove base (14b) thereof,
- inserting or positioning permanent magnets (13) in the grooves (14) in the main body (12),
- closing the injection mould by means of a locking part or preparing the injection mould for use,
- injecting a flowable, curable plastics compound, wherein the injection takes place under a pressure which causes the plastics compound to spread into cavities (19) between the magnets (13) and the grooves (14) and into the channels (14c) in or on the main body (12) and forms a cage (15) having peripheral rings (16a, 16b) formed on the end faces thereof, which rings are each connected to one another by means of longitudinal struts (17, 17b, 17c) which are formed in the cavities (19) and the channels (14c),
wherein the magnets (13) are moved outwards into or held in place in a predefined position by the pressure built up in the groove base (14b) when the plastics compound is introduced.

12. Method according to claim 11,
wherein a sleeve (18) is pulled over the magnets (14) inserted or positioned on the main body (12) before the flowable, curable plastics compound is injected.

13. Method according to claim 11,
wherein the permanent magnets (13) are in contact with the surface of the main body (12) or the inner surface of the injection mould before the curable plastics compound is injected into the injection mould.

## Revendications

1. Rotor (10) pour un moteur électrique (1), présentant une forme cylindrique avec un corps de base (12) monté au niveau d'un arbre (11) et dans lequel sont formées tout au moins plusieurs rainures (14) disposées surtout le pourtour, dans lesquelles un aimant permanent (13) est respectivement mis en place et fixé,
dans lequel le corps de base (12) est intégré dans une masse de matière plastique avec l'aimant permanent (13) mis en place en son intérieur, de telle sorte qu'il en résulte une cage (15) avec des bagues (16a, 16b) surtout le pourtour, formées au niveau des faces frontales, lesquelles bagues sont reliées l'une à l'autre au moyen de traverses longitudinales (17) formées respectivement entre deux aimants permanents (13) mis en place,
**caractérisé en ce que**, dans le corps de base (12), les rainures (14) présentent respectivement au niveau de leur fond de rainure (14b) tout au moins une rigole (14c) continue, dans laquelle se trouve une traverse (17b, 17c) continue en matière plastique, laquelle relie les deux bagues (16a, 16b) se trouvant au niveau de la face frontale et par l'intermédiaire de laquelle l'aimant permanent (13) respectif est maintenu en place dans la position prédéfinie.

2. Rotor (10) selon la revendication 1,
dans lequel les traverses longitudinales (17) présentent dans le profilé une forme trapézoïdale ou triangulaire avec une face longitudinale se trouvant à l'extérieur.

3. Rotor (10) selon la revendication 1 ou 2,
dans lequel la matière plastique est une matière plastique renforcée par des fibres, par exemple des fibres de polyester, des fibres en kevlar ou des fibres de carbone.

4. Rotor (10) selon l'une des revendications 1 à 3,
dans lequel la cage (15) est fabriquée au moyen d'un procédé de moulage par injection.

5. Rotor (10) selon l'une des revendications 1 à 4,
dans lequel les surfaces magnétiques (13b) sont formées en étant exposées au niveau de la face externe.

6. Rotor (10) selon l'une des revendications 1 à 4,
dans lequel les surfaces magnétiques (13b) sont recouvertes de matière plastique sur la face externe.

7. Rotor (10) selon l'une des revendications 1 à 6,
dans lequel les rainures (14) insérées dans le corps de base (12) présentent des surfaces latérales (14a) obliques, inclinées vers l'intérieur, au niveau desquelles les surfaces latérales (13a) des aimants (13), lesquelles présentent pour l'essentiel une inclinaison identique des surfaces latérales (14a), viennent directement ou indirectement en appui.

8. Rotor (10) selon l'une des revendications 1 à 7,
lequel comprend un manchon (18) ou un tube, lequel est embouti, au niveau de la face externe, sur les aimants (13) enfoncés dans la cage (15).

9. Rotor (10) selon la revendication 8,
dans lequel le manchon (18) comprend deux coques (18a, 18b) ou sections de tube qui présentent respectivement un appendice en bordure (18c) surtout le pourtour et se trouvant au niveau de la face frontale, en vue de la fixation au corps de base (12) ou à la bague (16a, 16b) de la cage (15).

10. Moteur synchrone (1) sans balai, à entraînement électrique, pourvu d'un rotor (10) selon l'une des revendications 1 à 9.

11. Procédé destiné à la fabrication d'un rotor (10) selon l'une des revendications 1 à 9, comprenant les étapes suivantes :
- mise en place d'un corps de base (12) dans un dispositif se trouvant dans un moule d'injection, dans lequel tout au moins plusieurs rainures (14) disposées sur tout le pourtour sont formées dans le corps de base (12) et les rainures (14) présentent respectivement au niveau de leur fond de rainure (14b) tout au moins une rigole (14c) continue dans le corps de base (12) ;
- mise en place ou positionnement d'aimants permanents (13) dans les rainures (14) se trouvant dans le corps de base (12) ;
- fermeture du moule d'injection au moyen d'une pièce d'obturation ou préparation du moule d'injection ;
- injection d'une masse de matière plastique polymérisable et ayant des propriétés d'écoulement, dans lequel l'injection a lieu au moyen d'une pression qui provoque une propagation de la masse de matière plastique dans des espaces creux (19) entre les aimants (13) et les rainures (14) ainsi que dans les rigoles (14c) se trouvant dans le corps de base (12) ou au niveau du corps de base et dans lequel il en résulte une cage (15) avec des bagues (16a, 16b) surtout le pourtour, formées au niveau des faces frontales, lesquelles bagues sont reliées l'une à l'autre au moyen de traverses longitudinales (17, 17b, 17c) formées dans les espaces creux (19) et dans les rigoles (14c),
dans lequel les aimants (13) sont déplacés vers l'extérieur ou maintenus en place, dans une position prédéfinie, par la pression appliquée dans le fond de la rainure (14b), lors de l'insertion de la masse de matière plastique.

12. Procédé selon la revendication 11,
dans lequel, avant l'injection de la masse de matière plastique polymérisable et ayant des propriétés d'écoulement, un manchon (18) est embouti sur les aimants (14) positionnés, respectivement insérés, sur le corps de base (12).

13. Procédé selon la revendication 11,
dans lequel les aimants permanents (13) reposent à la surface du corps de base (12) ou au niveau de la surface intérieure du moule d'injection, avant que la masse de matière plastique polymérisable soit injectée dans le moule d'injection.
